# EUROPÄISCHE PATENTANMELDUNG

(11) **EP 1 559 937 A1**
(43) Veröffentlichungstag der Anmeldung: **03.08.2005**
(21) Anmeldenummer: 05100706.0
(22) Anmeldetag: 02.02.2005
(51) Int. Cl.: F16K 11/07

(54) **Ventilschieber für ein Mehrwegeventil**

(30) Priorität: 02.02.2004 DE 102004005038
(71) Anmelder: Bosch Rexroth AG, 71701 Schwieberdingen (DE)
(72) Erfinder: Bonnin, Maurice, 74130, Bonneville (FR); Kulmann, Erwin, 71706, Markgröningen (DE); Bergmann, Klaus, 70499, Stuttgart (DE); Sulzberger, Klaus-Dieter, 71701, Schwieberdingen (DE)
(74) Vertreter: Kietzmann, Lutz

(57) **Zusammenfassung**

Ventilschieber für eine korrespondierende Schieberbohrung eines Mehrwegeventils zum Schalten eines Fluidflusses, mit mindestens zwei Führungsabschnitten (1a, 1b, 1c) größeren Durchmessers und mindestens einem Kammerabschnitt (2a, 2b) kleineren Durchmessers, die im Bereich mindestens einer Abschnittsgrenze (3a, 3b) aus mindestens zwei separaten Bauteilen (4a, 4b, 4c) bestehend miteinander verbunden sind, wobei die im Bereich der Abschnittsgrenze (3a; 3b) vorgesehene Verbindungsstelle nach Art eines eine Winkelverstellung relativ zur Schieberlängsachse (5) ermöglichenden Kugelgelenks ausgebildet ist, um geometrische Abweichungen der Schieberbohrung auszugleichen.

## Beschreibung

Die Erfindung betrifft einen Ventilschieber für eine korrespondierende Schieberbohrung eines Mehrwegeventils zum Schalten eines Fluidflusses, mit mindestens zwei Führungsabschnitten größeren Durchmessers und mindestens einem Kammerabschnitt kleineren Durchmessers, die als separate Bauteile gefertigt und im Bereich von Abschnittsgrenzen miteinander verbunden sind. Ferner betrifft die Erfindung auch ein nach dem innendichtenden oder außendichtenden Ventilschieberkonzept aufgebautes Mehrwegeventil, dass einen derartigen Ventilschieber besitzt.

Das technische Gebiet der vorliegenden Erfindung lässt sich eingrenzen auf Mehrwegeventile, die nach der Bauart eines Schieberventils konstruiert sind. Ein Schieberventil besitzt gewöhnlich mindestens eine zentrale Schieberbohrung, in welche hiervon abgehende Kanäle axial voneinander beabstandet einmünden. Die Kanäle führen andererseits zu äußeren Ventilanschlüssen zur Verbindung mit weiterführenden Druckmittelleitungen oder dergleichen. Innerhalb der Schieberbohrung ist ein Ventilschieber längs bewegbar angeordnet. Durch ein definiertes Verstellen des Ventilschiebers längs der Schieberbohrung erfolgt ein Schalten des Fluidflusses zwischen den äußeren Anschlüssen. Nach diesem technischen Prinzip können Mehrwegeventile mit unterschiedlichen Ventilfunktionen konstruiert werden. Auf dem technischen Gebiet der Schieberventile wird im Hinblick auf das Dichtprinzip unterschieden, in Mehrwegeventile mit einem innendichtenden Ventilschieber oder Mehrwegeventile mit einem außendichtenden Ventilschieber.

Bei einem Mehrwegeventil mit einem innendichtenden Ventilschieber sind die zwischen dem Ventilschieber und dem Ventilgehäuse erforderlichen Dichtringe seitens des Ventilgehäuses angeordnet, nämlich in entsprechenden Nuten. Diese Dichtringe bilden gegenüber dem sich hierzu relativ bewegenden Ventilschieber eine dynamische Dichtung über entsprechende innenradiale Dichtlippen.

Bei einem außendichtenden Ventilschieberkonzept sind die Dichtringe dagegen in entsprechende Nuten seitens des Ventilschiebers gehalten und bilden eine dynamische Dichtung über außenradiale Dichtlippen gegenüber dem Ventilgehäuse. Die vorliegende Erfindung ist sowohl für Ventilschieber nach dem innendichtenden als auch nach dem außendichtenden Konzept verwendbar.

Aus der DE 100 37 117 A1 geht ein gattungsgemäßer Ventilschieber hervor, der in Axialrichtung abwechselnd aus Führungsabschnitten und Kammerabschnitten gebildet ist. Der Ventilschieber ist für ein innendichtendes Ventilschieberkonzept vorgesehen und gelangt über seine Führungsabschnitte, die einen relativ größeren Durchmesser aufweisen, in Kontakt mit den seitens des Ventilgehäuses anzuordnenden Dichtungen oder direkt mit dem Ventilgehäuse. Dagegen besitzen die Kammerabschnitte einen relativ kleineren Durchmesser und bilden somit Durchflussstellen für dessen zu schaltenden Druckmittelfluss. Der Ventilschieber ist mehrteilig aufgebaut und besteht aus urgeformten Einzelbauteilen, die im Bereich von Abschnittsgrenzen zwischen einem Führungsabschnitt und einem Kammerabschnitt durch Ineinanderstecken miteinander verbindbar sind. Die jeweilige Verbindungsstelle kann durch Schweißen, Kleben, Rasten oder über eine Gewindeverbindung gegen ungewolltes Lösen gesichert werden. Insgesamt entsteht so ein starrer Ventilschieber.

Ein Nachteil dieser Lösung für einen Ventilschieber besteht jedoch darin, dass aufgrund von Fertigungstoleranzen Leckstellen oder recht hohe Gleitreibungswerte am Ventilschieber entstehen können. Beim Spritzgießen des Ventilgehäuses aus Kunststoff sind nämlich recht hohe Toleranzen in der Maßhaltigkeit der Schieberbohrung hinzunehmen. Bisher konnten diese Fertigungstoleranzen nur über Dichtringe ausgeglichen werden, welche in Radialrichtung eine entsprechende Flexibilität aufweisen. Sind recht lange Schieberbohrungen erforderlich, so verschärft sich diese Problematik im Verhältnis zur Länge der Schieberbohrung.

Es ist daher die Aufgabe der vorliegenden Erfindung, einen Ventilschieber für eine korrespondierende Schieberbohrung eines weitestgehend spritzgegossenen Mehrwegeventils zu schaffen, mit welchem trotz fertigungstechnisch bedingten Toleranzen bei der Ventilschieber-Schieberbohrung-Paarung eine druckdichte und reibungsarme relative Bewegbarkeit sichergestellt wird.

Die Aufgabe wird ausgehend von einem Ventilschieber gemäß dem Oberbegriff des Anspruch 1 in Verbindung mit dessen kennzeichnenden Merkmalen gelöst. Die nachfolgenden abhängigen Ansprüche geben vorteilhafte Weiterbildungen der Erfindung wieder.

Die Erfindung schließt die technische Lehre ein, dass die im Bereich mindestens einer Abschnittsgrenze vorgesehene Verbindungsstelle nach Art eines eine Winkelverstellung relativ zur Schieberlängsachse ermöglichenden Kugelgelenks ausgebildet ist, um geometrische Abweichungen der Schieberbohrung auszugleichen.

Somit wendet sich die Erfindung ab von den bisher bekannten starren Ventilschiebern und schafft über das mindestens eine entlang des Ventilschiebers an günstiger Stelle angeordnete Kugelgelenk eine mehrgliedrige Lösung, welche sich flexible an nicht exakt fluchtende Schieberbohrungen anpassen kann. Die erfindungsgemäße Lösung gestattet weiterhin eine Verwendung von einfacheren Dichtringen, welche mit einer geringeren radialen Flexibilität auskommen. Die insbesondere beim Spritzgießen von Ventilteilen, wie dem Ventilschieber oder dem Ventilgehäuse, auftretenden Fertigungstoleranzen lassen sich so auf einfache Weise ausgleichen. Dabei ist es möglich, diese Fertigungstoleranzen im Prinzip hinzunehmen und das in diesem Zusammenhang stehende Dichtheits- bzw. Reibungsproblem durch den erfindungsgemäß ausgebildeten Ventilschieber zu lösen. Dabei eignet sich der Erfindungsgegenstand für Mehrwegeventile nach dem innendichtenden und dem außendichtenden Ventilschieberkonzept gleichermaßen.

Die durch das mindestens eine Kugelgelenk bewirkte Beweglichkeit des Ventilschiebers um dessen Längsachse gestattet eine solche Anpassung an die Schieberbohrung, dass im Dauerbetrieb der Verschleiß minimiert wird zugunsten einer langen Lebensdauer des Mehrwegeventils. Ein Spritzgießen des Ventilschiebers ohne Trenngrat im Bereich der Dichtungen ist möglich.

Vorzugsweise besteht das Kugelgelenk aus einem Verbindungszapfen mit endseitiger Durchmessererweiterung, der insoweit formschlüssig mit einer korrespondierend geformten Ausnehmung zusammenwirkt. Eine Montage des Verbindungszapfens in die Ausnehmung kann durch Einrasten des Verbindungszapfens in die mit einer Hinterschneidung ausgestatteten Ausnehmung erfolgen oder durch ein Umspritzen des Verbindungszapfens mit Kunststoff, welcher das angrenzende Bauteil samt Ausnehmung bildet. Hierbei ist darauf zu achten, dass durch das Umspritzen des Verbindungszapfens keine Anhaftung des angespritzten Bauteils entsteht, was die relative Bewegbarkeit behindern könnte. Die Schmelztemperatur des Kunststoffs, dessen Schrumpfungseigenschaften sowie die Geometrie des Verbindungszapfens sind entsprechend auszuwählen.

Gemäß einer die Erfindung verbessernden Maßnahme kann der Verbindungszapfen als distales Ende des Kammerabschnitts kleineren Durchmessers ausgebildet sein. Weiterhin kann dieser Kammerabschnitt kleineren Durchmessers einstückig mit dem benachbarten Führungsabschnitt größeren Durchmessers ausgebildet werden. Denn es ist nicht erforderlich, das an jeder Abschnittsgrenze auch ein Kugelgelenk vorzusehen ist, um den erfindungsgemäßen Vorteil zu bewirken. Die mit dem Verbindungszapfen korrespondierende Ausnehmung kann vorteilhafterweise koaxial in den Führungsabschnitt größeren Durchmessers eingebracht werden. An dieser Stelle ist eine die Ausnehmung umgebende genügende Wandungsdicke vorhanden, um eine zuverlässige Verbindung auf Dauer sicherzustellen.

Vorzugsweise braucht das erfindungsgemäße Kugelgelenk lediglich eine Winkelverstellung von bis zu 5° in Abweichung zur Schieberlängsachse zuzulassen, um das der Erfindung zugrunde liegende Problem zu lösen. In den meisten Fällen genügt sogar ein Winkelverstellbereich von 1° in Abweichung zur Schieberlängsachse. Aufgrund dieses geringen erforderlichen Winkelverstellbereichs kann das Kugelgelenk auch - wie vorstehend beschrieben - recht einfach aufgebaut sein.

Gemäß einer der Erfindung zur Realisierung eines außendichtenden Ventilschiebersystems verbessernden Maßnahme wird vorgeschlagen, den Bereich der Abschnittsgrenze gleichzeitig als Nut ohne Trenngrat zur Aufnahme eines auf den Ventilschieber angeordneten Dichtrings zu nutzen. Hiermit wird die Herstellung des Ventilschiebers und die Montage des Dichtrings erheblich vereinfacht. Eine solche dichtringtragende Abschnittsgrenze kann auch zwischen zwei Kammerabschnitten kleineren angeordnet sein. Der Dichtring selbst bildet in diesem Falle den Kammerabschnitt größeren Durchmessers, welcher in Kontakt mit dem Ventilgehäuse steht.

Die einzelnen, den erfindungsgemäßen Ventilschieber ergebenden Bauteile können einzelne oder mehrere Führungsabschnitte beziehungsweise Kammerabschnitte in alternierender Anordnung aufweisen, die entweder einstückig miteinander ausgebildet sind oder durch eine feste Steckverbindung montiert werden. Weiterhin können je nach Länge des Ventilschiebers und der Toleranzbedingungen eine oder mehrere Kugelgelenke entlang des Ventilschiebers an günstigen Abschnittsgrenzen vorgesehen werden.

Weitere die Erfindung verbessernde Maßnahmen werden nachstehend gemeinsam mit der Beschreibung bevorzugter Ausführungsbeispiele der Erfindung näher dargestellt. Es zeigt:
- Fig. 1: einen Ventilschieber für einen innendichtendes Ventilschieberkonzept mit mehreren Kammerabschnitten und Führungsabschnitten,
- Fig.2: eine Detaildarstellung des Ventilschiebers nach Fig.1 im Bereich einer Abschnittsgrenze,
- Fig.3: einen Längsschnitt durch einen als separates Bauteil ausgebildeten Führungsabschnitt des Ventilschiebers,
- Fig.4: einen Längsschnitt durch einen als separates Bauteil ausgebildeten Führungs- und Kammerabschnitt und
- Fig.5: ein weiteres Ausführungsbeispiel eines Ventilschiebers, hier zur Realisierung eines außendichtenden Ventilschieberkonzepts.

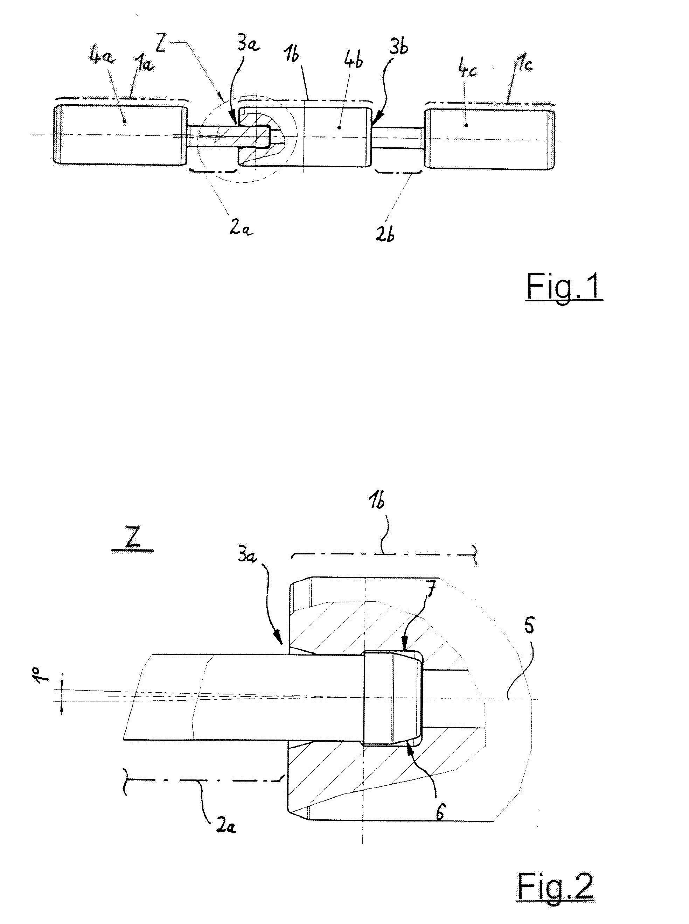

Gemäß Fig. 1 besteht der gezeigte Ventilschieber für eine - nicht weiter dargestellte - korrespondierende Schieberbohrung eines Mehrwegeventils geometrisch gesehen aus drei Führungsabschnitten 1a-1c größeren Durchmessers, die über dazwischenliegende Kammerabschnitte 2a und 2b kleineren Durchmessers miteinander verbunden sind.

Der Ventilschieber dieses Ausführungsbeispiels besteht konkret aus drei separaten Bauteilen 4a-4c. Das Bauteil 4a umfasst dabei den Führungsabschnitt 1a größeren Durchmessers, mit welchem koaxial und einstückig der Kammerabschnitt 2a kleineren Durchmessers verbunden ist. Der Führungsabschnitt 1b größeren Durchmessers bildet ein separates Bauteil 4b. Das Bauteil 4c ist als eine einstückige Einheit ausgebildet, bestehend aus dem Kammerabschnitt 2b kleineren Durchmessers und dem Führungsabschnitt 1c größeren Durchmessers. Die einzelnen Bauteile 4a-4c bestehen aus Kunststoff und sind durch Spritzgießen hergestellt.

Aus der Figur 2 geht exemplarisch der Aufbau des Ventilschiebers im Bereich der Abschnittsgrenze 3a hervor. An dieser Verbindungsstelle ist ein Kugelgelenk vorgesehen, welches eine Winkelverstellung - hier um 1° Grad - relativ zur Schieberlängsachse 5 ermöglicht. Das Kugelgelenk besteht aus einem Verbindungszapfen 6, der am distalen Ende des Kammerabschnitts 2a geringeren Durchmessers ausgebildet ist und eine endseitige Durchmessererweiterung aufweist. Der Verbindungszapfen 6 korrespondiert formschlüssig mit einer Ausnehmung 7 seitens des Führungsabschnitts 1b größeren Durchmessers, so dass beide Verbindungspartner ein Kugelgelenk bilden. Dabei sind die entsprechenden Abmessungen so gewählt, dass sich die geringfügige Winkelverstellung von circa 1° Grad relativ zur Schieberlängsachse 5 ergibt.

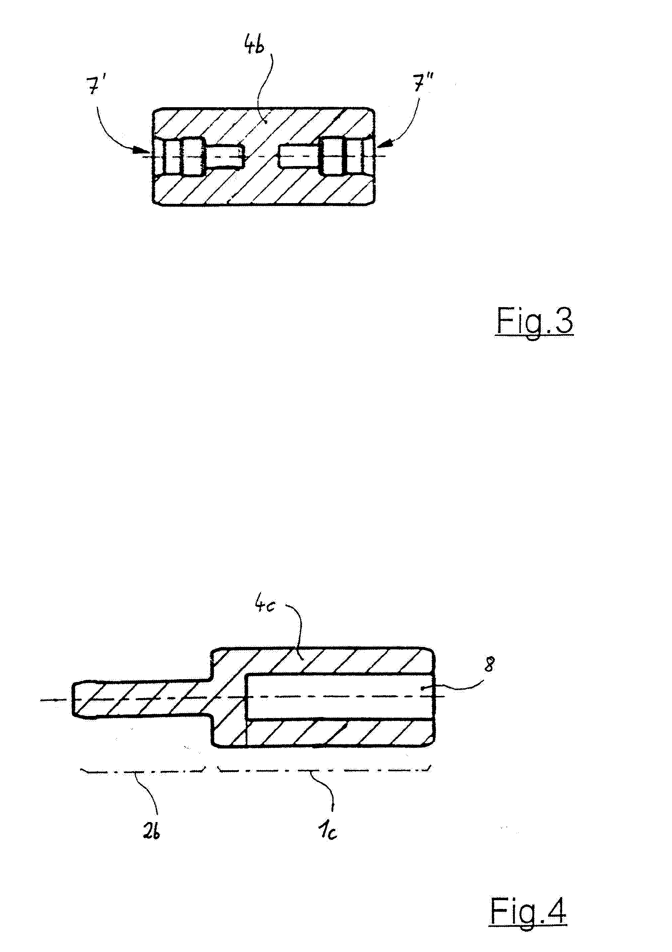

Gemäß Figur 3 besitzt das mittlere Bauteil 4b zwei an den Stirnseiten einander gegenüberliegend eingebrachte Ausnehmungen 7' sowie 7". Die beiden Ausnehmungen 7' und 7" dienen jeweils der gelenkigen Aufnahme je eines - hier nicht weiter dargestellten - Verbindungszapfens 6, so dass der Ventilschieber hier insgesamt zwei Kugelgelenke aufweist.

Das in der Figur 4 dargestellte korrespondierende Bauteil 4c besteht aus einem Führungsabschnitt 1c größeren Durchmessers, an welchem koaxial der Kammerabschnitt 2b kleineren Durchmessers angeformt ist. Zur Materialeinsparung oder Verzugsverringerung ist im Bereich des Führungsabschnitts 1c größeren Durchmessers eine topfförmige Ausnehmung 8 vorgesehen. (Das Bauteil 4a aus Figur 1 besitzt den gleichen Aufbau wie das vorstehend beschriebene Bauteil 4c.)

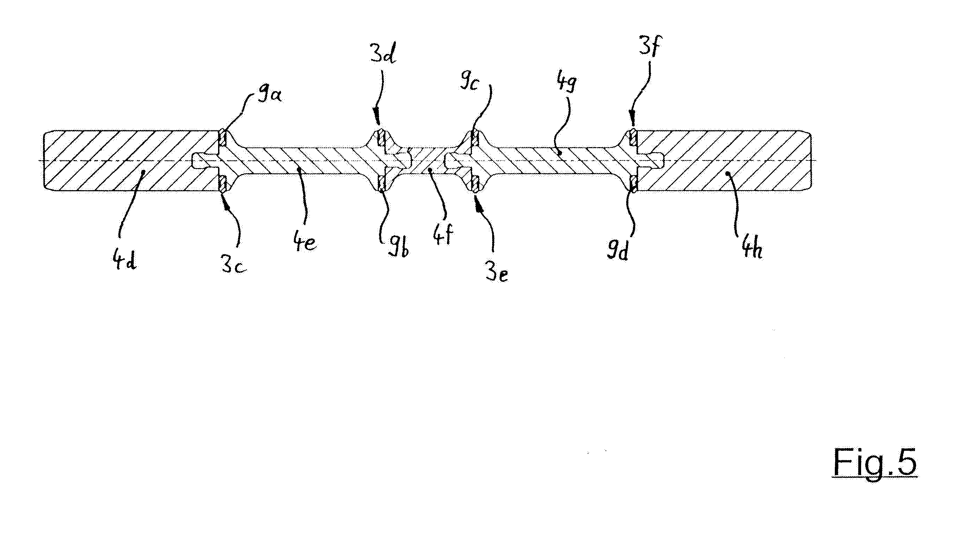

Bei der in Figur 5 dargestellten weiteren Ausführungsform der erfindungsgemäßen Ventilschiebers handelt es sich um einen Ventilschieber zur Realisierung eines außendichtenden Ventilkonzepts, welcher insoweit zusätzlich mit Dichtringen 9a-9d bestückt ist. Die Dichtringe 9a-9d sind innerhalb korrespondierender Nuten seitens des Ventilschiebers gehalten, welche jeweils im Bereich der Abschnittsgrenzen 3c-3f angeordnet sind. Im Bereich jeder dieser Abschnittsgrenzen 3c-3f ist hier weiterhin auch ein Kugelgelenk zur Winkelverstellung relativ zur Schieberlängsachse 5 vorgesehen. Durch die in Axialrichtung gesehene Elastizität der Dichtringe 9a-9d ist hier eine ausreichende Winkelverstellung an insgesamt vier Verbindungsstellen möglich.

Der Ventilschieber besteht in diesem Ausführungsbeispiel aus insgesamt fünf separaten Bauteilen 4d-4h. Axial ausgedehnte Führungsabschnitte größeren Durchmessers sind bei den endseitigen Bauteilen 4d und 4h vorgesehen, wogegen die dazwischenliegenden Bauteile 4e-4g Kammerabschnitte kleineren Durchmessers bilden und die im Bereich der Abschnittsgrenzen 3d und 3e angeordneten Dichtringe 9b und 9c allein einen Führungsabschnitt größeren Durchmessers ausbilden, was durch das hier außendichtende Ventilschieberkonzept bedingt ist.

Beim Erfindungsgegenstand können die zuerst gefertigten Teile mit den Verbindungszapfen in einem geeigneten Werkzeug aufwandssparend nur umspritzt zu werden, um die gelenkig hieran anzubringenden Teile mit korrespondierenden Ausnehmungen zu schaffen. Hierbei ist darauf zu achten, dass eine stoffschlüssige Verbindung nicht entsteht, um die Beweglichkeit im Gelenk zu ermöglichen. Natürliche Schrumpfungsprozesse nach dem Spritzgießen - bei geeigneter unterschiedlicher Kunststoff-Materialwahl für beide über das Gelenk zu verbindenden Teile - begünstigen dieses Ziel.

Alternativ hierzu ist es auch denkbar, zwei miteinander zu verbindende Teile zuerst einzeln herzustellen und anschließend durch mechanisches Fügen (Schnappverbindung) formschlüssig miteinander zu verbinden.

### Bezugszeichenliste

- **1**: Führungsabschnitt (größeren Durchmessers)
- **2**: Kammerabschnitt (kleineren Durchmessers)
- **3**: Abschnittsgrenze
- **4**: Bauteil
- **5**: Schieberlängsachse
- **6**: Verbindungszapfen
- **7**: Ausnehmung
- **8**: Ausnehmung
- **9**: Dichtring

## Patentansprüche

1. Ventilschieber für eine korrespondierende Schieberbohrung eines Mehrwegeventils zum Schalten eines Fluidflusses, mit mindestens zwei Führungsabschnitten (1a, 1b, 1c) größeren Durchmessers und mindestens einem Kammerabschnitt (2a, 2b) kleineren Durchmessers, die im Bereich mindestens einer Abschnittsgrenze (3a, 3b) aus mindestens zwei separaten Bauteilen (4a, 4b, 4c) bestehend miteinander verbunden sind,
**dadurch gekennzeichnet, dass** die im Bereich der Abschnittsgrenze (3a; 3b) vorgesehene Verbindungsstelle nach Art eines eine Winkelverstellung relativ zur Schieberlängsachse (5) ermöglichenden Kugelgelenks ausgebildet ist, um geometrische Abweichungen der Schieberbohrung auszugleichen.

2. Ventilschieber nach Anspruch 1,
**dadurch gekennzeichnet, dass** das Kugelgelenk aus einem Verbindungszapfen (6) mit endseitiger Durchmessererweiterung besteht, der formschlüssig mit einer korrespondierenden Ausnehmung (7) zusammenwirkt.

3. Ventilschieber nach Anspruch 2,
**dadurch gekennzeichnet, dass** der Verbindungszapfen (6) das distale Ende des Kammerabschnitts (2a) kleineren Durchmessers bildet.

4. Ventilschieber nach Anspruch 2,
**dadurch gekennzeichnet, dass** die Ausnehmung (7) koaxial in den Führungsabschnitt (1a, 1b, 1c) größeren Durchmessers eingebracht ist.

5. Ventilschieber nach Anspruch 1,
**dadurch gekennzeichnet, dass** das Kugelgelenk eine Winkelverstellung von bis zu 5°, vorzugsweise 1°, in Abweichung zur Schieberlängsachse (5) zulässt.

6. Ventilschieber nach Anspruch 1,
**dadurch gekennzeichnet, dass** zur Realisierung eines außendichtenden Ventilschieberkonzept im Bereich mindestens einer Abschnittsgrenze (3c bis 3f) eine Nut ohne Trenngrat zur Aufnahme eines Dichtrings (9a bis 9d) vorgesehen ist (Fig. 5).

7. Ventilschieber nach Anspruch 6,
**dadurch gekennzeichnet, dass** eine dichtringtragende Abschnittsgrenze (3d, 3f) zwischen zwei Kammerabschnitten (4e, 4f; 4f, 4g) kleineren Durchmessers angeordnet ist (Fig. 5).

8. Ventilschieber nach Anspruch 1,
**dadurch gekennzeichnet, dass** eines der separaten Bauteile (4a; 4c) einen Führungsabschnitt (4c; 4a) größeren Durchmessers umfasst, an dem der Kammerabschnitt (2b; 2a) kleineren Durchmessers koaxial angeformt ist (Fig.4).

9. Ventilschieber nach Anspruch 8,
**dadurch gekennzeichnet, dass** das korrespondierende Bauteil (4b) einen weiteren Führungsabschnitt (1b) größeren Durchmessers bildet (Fig. 3).

10. Ventilschieber nach Anspruch 9,
**dadurch gekennzeichnet, dass** am korrespondierenden Bauteil zusätzlich ein Kammerabschnitt (2) kleineren Durchmessers gegenüberliegend der Abschnittsgrenze zum Bauteil (4b) koaxial angeformt ist.

11. Ventilschieber nach Anspruch 9,
**dadurch gekennzeichnet, dass** das korrespondierende Bauteil (4b) beidseitig mit einer Ausnehmung (7', 7") zur jeweiligen gelenkigen Aufnahme je eines Verbindungszapfens (6) versehen ist.

12. Mehrwegesventil nach dem innendichtenden bzw. außendichtenden Ventilschieberkonzept, umfassend einen Ventilschieber gemäß einem der vorstehenden Ansprüche.
